# EUROPEAN PATENT SPECIFICATION

(11) **EP 0 817 179 B1**
(45) Date of publication and mention of the grant of the patent: **25.07.2001**
(21) Application number: 97202996.1
(22) Date of filing: 11.05.1992
(51) Int. Cl.: G11B 7/00, G11B 20/10, G11B 11/10, G11B 19/02

(54) **Optical data storage and retrieval system and method**
System und Verfahren zur optischen Speicherung und Wiedergewinnung von Daten
Système et procédé de stockage et recherche optique de données

(30) Priority: 10.05.1991 US 698673; 12.09.1991 US 758059
(43) Date of publication of application: 07.01.1998
(62) Divisional of application: 92913851.9
(73) Proprietor: DISCOVISION ASSOCIATES, Irvine, CA 92714 (US)
(72) Inventor: Kimura, Noboru, Torrance, CA 90505 (US); Vitullo, Ronald G., Laguna Niguel, CA 92667 (US); Yamazaki, Yasuhiro, Cypress, CA 90630 (US)
(74) Representative: Vuillermoz, Bruno

(56) References cited:
- EP-A- 0 064 196
- EP-A- 0 265 849
- EP-A- 0 320 975
- EP-A- 0 388 271
- EP-A- 0 418 100
- EP-A- 0 450 622
- GB-A- 2 098 379
- US-A- 4 961 182

## Description

### Background of the Invention

This invention relates to digital data storage and retrieval and, more particularly, an optical data storage and retrieval system and method.

Recordable/erasable optical disks are currently available for use as data storage media. Magneto-optical recording is the technique commonly used to store the data and/or retrieve the data from the disk. During recording a magnetic field orients the polarity of a generalized area on the disk while a laser pulse heats a localized area thereby fixing the polarity of the smaller area. The localized area with fixed-polarity is commonly called a pit. Some encoding systems use the existence or absence of a pit on the disk to define the recorded data as a "1" or "0" respectively. The most commonly used encoding system for this pit type recording is the run length limited (RLL) 2,7 code because it gives the highest data to pit ratio. This type of recording, however, does not lead to higher density because amplitude and timing margins deteriorate very rapidly as frequency is increased.

For example, such devices have been disclosed in EP-A-0 418 100 or in EP-A-0 265 849.

### Summary of the Invention

The invention is defined in the appended claims.

### Brief Description of the Drawings

FIG. 1 is a block diagram showing the optical data storage and retrieval system;
FIG. 2 is a series of waveforms showing uniform laser pulsing under a pulsed GCR format and non-uniform laser pulsing under an RLL 2,7 format;
FIG. 3 is a series of waveforms showing laser pulsing for various data patterns adjusted by the write compensation circuit;
FIG. 4 is a schematic diagram showing the write compensation circuit;
FIG. 5 is a series of waveforms showing laser pulsing for amplitude asymmetry correction;
FIG. 6 is a schematic diagram showing the amplitude asymmetry correction circuit;
FIG. 7 is a block diagram showing the basic relationship of elements of the pulse slimming means;
FIG. 8 is a series of waveforms showing threshold adjustments by the dynamic threshold circuit;
FIG. 9 is a schematic diagram for the dynamic threshold circuit; and
FIG. 10 is a schematic block diagram of an optical data storage and retrieval system incorporating downward compatibility.

### Detailed Description of the Specific Embodiments

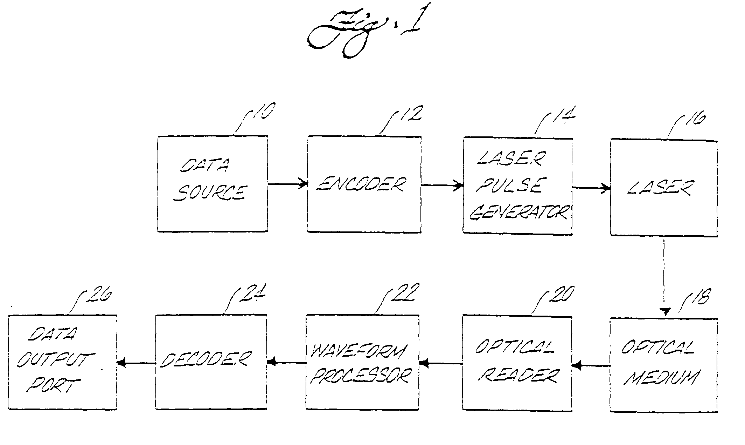

In FIG. 1, during the write mode, a data source 10 transmits data to an encoder 12. The encoder 12 converts the binary data into binary code bits. The code bits are then transmitted to a laser pulse generator 14 where the code bits are converted to energizing pulses for turning a laser 16 on and off. In the preferred embodiment, a code bit "1" indicates that the laser will be pulsed on for a fixed duration independent of the code bit pattern. However, depending on the laser and optical medium being used, performance may be enhanced by adjusting the occurrence of the laser pulse or by extending the otherwise uniform pulse duration. The output of laser 16 heats localized areas of an optical medium 18 which is being exposed to a magnetic flux that sets the polarity of the magnetic material on the optical medium 18. During reads of the optical medium, a laser beam is impinged on the surface of the medium. The polarization of the reflected laser beam will be dependent upon the polarity of the magnetic surface of the optical medium.

During the read mode, the reflected laser beam will be inputted into an optical reader 20, where the read code output will be sent to the waveform processor 22. The processed read code will be sent to a decoder 24 where output data will be transmitted to a data output port 26 for transmission.

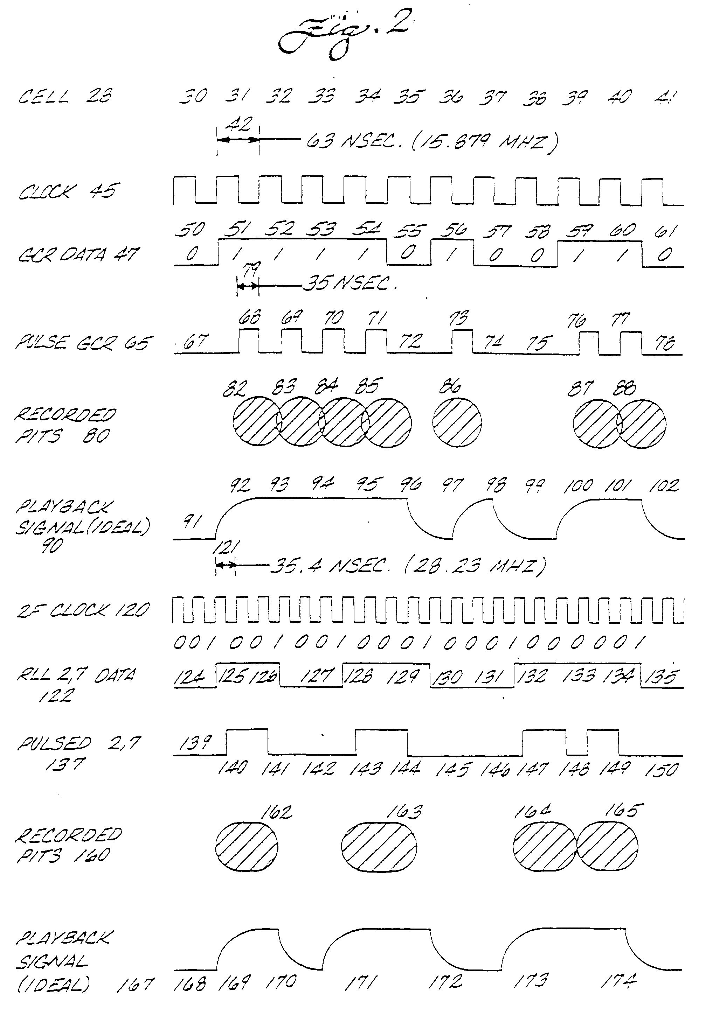

FIG. 2 depicts the differences between the laser pulsing in GCR 8/9 and RLL 2,7 code formats. In GCR 8/9, a cell 28 is defined as a code word corresponding to a data bit. For GCR 8/9, a cell is equal to one data bit. Thus, cells 30 through 41 each correspond to one clock period 42 of clock waveform 45. For a 3 1/2" optical disk rotating at 2,400 revolutions per minute (RPM) with a storage capacity of 256 MBYTES clock period 42 will typically be 63 nanoseconds or a clock frequency of 15.879 MHz. GCR data waveform 47 is the encoded data output from the encoder 12. A representative data sequence is depicted in FIG. 2. The code data sequence 011110100110 is shown in GCR data 50 through 61 where GCR data 50 is a "0". GCR data 51 is a "1". GCR data 52 is a "1" and so forth for GCR data 53 through 61. Pulse GCR waveform 65 is the output from laser pulse means 14 inputted into pulse laser 16. Pulse GCR waveform 65 as shown has not been adjusted in time or duration to reflect performance enhancement for specific data patterns. Pulse GCR 67 through 78 reflect no pulse when the corresponding GCR data 47 is "0" and reflects a pulse when GCR data 47 is a "1". For example, pulse GCR 67 has no pulse because GCR data 50 is a "0". Conversely, pulse GCR 68, 69, 70 and 71 show a laser pulse because GCR data 51 through 54 are a "1" respectively, and similarly for pulse GCR 72 through 78. Under the depicted uniform scenario, pulse GCR pulsewidth 79 is uniform for pulse GCR 68, 69, 70, 71, 73, 76 and 77. For the preferred embodiment this pulsewidth is 35 nanoseconds. Each laser pulse corresponding to pulse GCR waveform 65 creates a recorded pit 80 on optical medium 18. Recorded pit 82 corresponds to pulse GCR 68. Recorded pit 83 corresponds to pulse GCR 69. Similarly, recorded pits 84 through 88 corresponds to pulse GCR 70, 71, 73, 76 and 77, respectively.

Because of thermal dissipation and spot size on the optical medium 18, the recorded pits 80 are wider in time than pulse GCR 65. Successive recorded pits 80 merge together to effectively create a larger recorded pit. Thus the elongated recorded pit has a leading edge corresponding to the first recorded pit and a trailing edge corresponding to the last recorded pit. For example, the pit created by recorded pits 82 through 85 has a leading edge from recorded pit 82 and a trailing edge from pit 85. Under the GCR 8/9 data format, a rising edge corresponds to a "1" while a trailing edge corresponds to a "0". Hence, for data pattern "11110" as shown by GCR data 51 through 55, a rising edge occurs for the first "1" as shown by recorded pit 82, and, at the end of the GCR data 54, a trailing edge occurs as shown by recorded pit 85, because GCR data 55 is a "1".

Playback signal 90 will be low when recorded pit 80 shows no pits. At the leading edge of a pit, playback signal 90 will rise and remain high until the trailing edge of the pit is reached. The signal will go low and remain low until the next pit. For example, playback signal 91 is low because GCR data 47, which is a "0", did not create a pit. At the front edge of recorded pit 82, playback signal 90 has a rising edge as shown in playback signal 92. Playback signal 90 will then remain unchanged until a trailing edge occurs on a recorded pit. For example, because recorded pits 83 and 84 show no trailing edge, playback signal 93 and 94 remains high. The signal remains high during playback signal 95 because of recorded pit 85. However, because GCR data 55 is a "0", recorded pit 85 creates a trailing edge. Thus, playback signal 56 decays. The signal will decay to 0 until a recorded pit occurs creating a rising edge. Thus, with the occurrence of recorded pit 86, which corresponds to GCR data 56 being a "1", playback signal 97 rises. Because there is no immediate successor to recorded pit 86 when GCR data 57 is a "0", playback signal 98 decays. Playback signal 99 remains low because there is no recorded pit when GCR data 58 is a "0". With GCR data 59 and 60 being "1", recorded pits 87 and 88 overlap creating one larger pit. Thus, playback signal 100 rises and playback signal 101 remains high. Playback signal 102 falls at the trailing edge of recorded pit 88 when GCR data 61 is a "0".

For RLL 2,7 a cell consists of two data bits which corresponds to two clock periods 121 of 2F clock waveform 120. For a 256 MBYTE disk, an RLL 2,7 encoding format will require a 2F clock pulse width 121 of 35.4 nanoseconds or a clock frequency of 28.23 MHz. The calculation of this value is straightforward. In order to maintain the same disk density, the GCR 8/9 and RLL 2,7 encoding formats must contain the same amount of information in the same recording time. Because two code bits are required per data bit, the RLL 2,7 format requires a clock frequency twice that of the data bits of the GCR data. The GCR data format records nine bits of code bits per eight bits of data. Thus, the GCR data bit clock is nine-eighths of the clock period 42. Thus, for a GCR clock period 42 of 63 nanoseconds, the RLL 2,7 pulse width 121 must be 35.4 nanoseconds in order to maintain the same disk density.

The RLL 2,7 data waveform 122 reflects two code bits per cell. For example, RLL 2,7 data 124 shows a data pattern "00" while RLL 2,7 data 125 shows a data pattern "01". In this data format, a "1" represents a transition in data. Thus, 2,7 data 125 goes high when the "1" occurs in the data pattern. Similarly, RLL 2,7 data 126 goes low when the "1" occurs in the data pattern. While a "0" occurs RLL 2,7 data 122 remains in the same state. Pulsed 2,7 waveform 137 reflects the pulsing of laser 16 corresponding to RLL 2,7 data 122. Thus, for 2,7 data 125 and 126, during the period when that signal is high, pulsed 2,7 waveform 140 and 141 is high. Because of the thermal elongation of the pit, pulsed 2,7 waveform 141 goes low prior in time to RLL 2,7 data 126. For longer data patterns of "0", the pulsing must remain on. For example, during the data pattern "10001" as shown in RLL 2,7 data 128 and 129, pulsed 2,7 waveform 143 and 144 remains high longer than pulsed 2,7 waveform 140 and 141. For data patterns of successive "0", the pulsed 2,7 waveform 137 can be pulsed as separate pulses. For example, for the data pattern "1000001" RLL 2,7 data 132, 133 and 134 can be pulsed in two separate pulses as shown in pulse 2,7 147, 148 and 149.

As with the GCR 8/9 format, recorded pit 160 shows thermal elongation. For example, recorded pit 162 is wider in time than the pulse from pulsed 2,7 waveform 140 and 141; similarly for recorded pit 163. Physical limitations of existing lasers and optical disks prevent recorded pit 163 from being recorded in two successive pulses at 2F clock 120 frequency. Thus, for these intermediate size pits, the thermal accumulation distortion effects will be greater than in either recorded pit 162 or the combined recorded pits 164 and 165. Again, playback signal 167 depicted by playback signal 168 through 174 goes high on leading edges of recorded pits 160, decays on trailing edges of recorded pits 160 and remains constant during the presence or absence of pits.

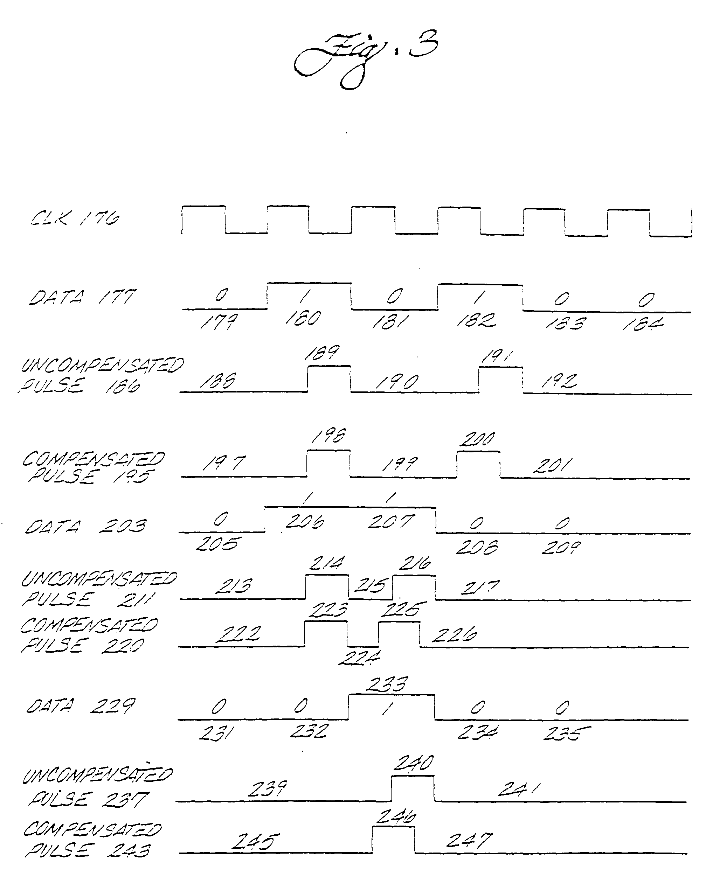

The pulsed GCR code can be improved by correcting predictable position shifts. FIG. 3 shows the timing 20 diagram for the write compensation of the laser pulse generator 14. Experimental testing showed that recording early when the laser 16 is off for two bits or greater enhances performance. Clock waveform 176 is the code bit clock used for clocking data 177, 203 and 229 which show the worst case data patterns for enhancement. Other patterns can be corrected but will suffer in signal amplitude. Data 180 through 184 corresponds to the data sequence "10100". The uncompensated pulse waveform 188 through 192 corresponds to this data pattern without write compensation. Uncompensated pulse waveform 189 and 191 occur in the second half of the clock period. After write compensation, the output of laser pulse generator 14 corresponds to compensated pulse waveform 195 where compensated pulse waveforms 197 and 198 remains unchanged and a shortened off-period for compensated pulse waveform 199 provides an earlier compensated pulse waveform 200. During compensated pulse 201, laser 16 remains off for a longer duration than uncompensated pulse 192. Similarly for data 206 through 209 corresponding to data pattern "1100" uncompensated pulse waveform 211 would be off for uncompensated pulse waveform 213 followed by two pulses uncompensated pulse waveforms 214 and 216. Again, the write compensation circuit adjusts compensated pulse wave form 220 so that compensated pulse waveform 225 will occur closer in time to compensated pulse waveform 223 so that compensated pulse waveform 224 is shorter than uncompensated pulse waveform 215. Finally, data 231 through 235 corresponding to the data pattern "00100" has uncompensated pulse waveform 237 occurring at uncompensated pulse waveform 240. Write compensation would move compensated pulse waveform 243 earlier in time to compensated pulse waveform 246.

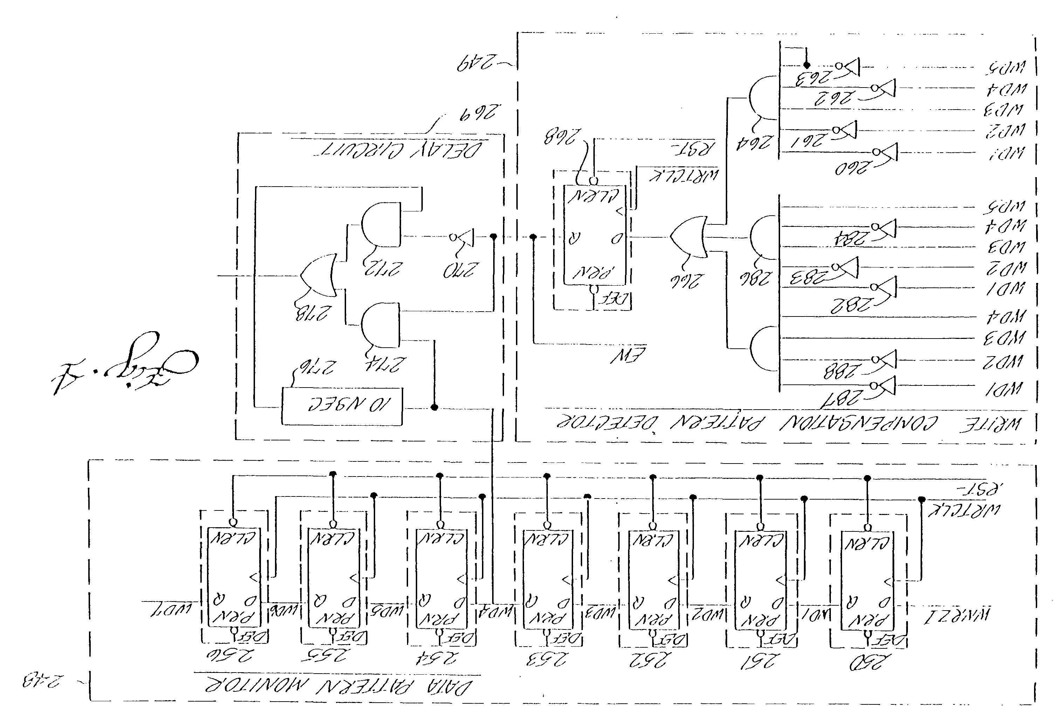

FIG. 4 shows the schematic diagram of the write compensation circuit which comprises data pattern monitor 248, write compensation pattern detector 249 and delay circuit 269. Data pattern monitor 248 is a serial shift register that sequentially clocks encoded data from encoding means 12. The last six clocked in data bits are sent to write compensation pattern detector 249 where they are analyzed for determining whether to pulse the laser earlier than normal.

Data pattern monitor 248 consists of data sequence D flip flops 250 through 256. Encoded data is input into the D port of data sequence D flip flop 250 whose Q output WD1 becomes the input of the D port of data sequence D flip flop 251. This clocking continues through data sequence D flip flops 252 through 256 whose Q output WD7 is the data sequence delayed by seven clock periods from when it was first input into data pattern monitor 248. The Q outputs, WD1, WD2, WD3, WD4, and WD5 of data sequence D flip flops 250 through 255, respectively, represent the last six of the last seven data bits inputted into a data pattern monitor 248. These six bits are sent to a write compensation pattern detector 249 where they are compared to predetermined data patterns, and, if they match, an enable write signal is sent to a delay circuit 269 to indicate that the laser pulse is to occur earlier than normal.

The first data pattern is detected by inverting the Q data WD1, WD2, WD3, and WD4 from data sequence D flip flops 250, 251, 253 and 254 through data inverters 260, 261, 262 and 263 respectively. The output of these inverters is AND'd with the output from data sequence D flip flop 252 in detect AND gate 264. Thus when a sequence "00100" occurs, the output of detect AND gate 264 goes high indicating that a detect of the data pattern occurred. Similarly, the second data pattern is detected by inverting the Q output WD2, WD2, and WD4 from data sequence D flip flops 250, 251, and 253 through the data inverters 282, 283, and 284 respectively and ANDing with the outputs, WD4 and WD6 of data sequence D flip flops 252 and 254 in detect AND gate 286. Thus, a data pattern of "010100" will trigger a high from detect AND gate 286 indicating a detect. The third data sequence is detected by inverting the Q output WD1 and WD2 from data sequence D flip flops 250 and 251 through data inverters 287 and 288 and ANDing with the Q output WD3 and WD4 from data sequence D flip flops 252 and 253 in data detect AND gate 289. Thus the data pattern of "1100" will trigger a detect from detect AND gate 289 indicating the presence of the data. The data pattern detect output of detect AND gates 264, 286 and 289 is OR'd in detected pattern OR gate 266 whose output goes high when one of the three data patterns is detected. The detected pattern output is clocked in enable write D flip flop 268 where Q output, enable write signal, is then sent to delay circuit 269.

Delay circuit 269 takes the clocked data output WD4 of data sequence D flip flop 253 and simultaneously inputs it into delay line 276 and not delay select AND gate 274. The delayed output of delay line 276 is inputted into delay select AND gate 272. The enable write signal from write compensation pattern detector 249 will enable either delay select AND gate 272 or not delay select AND gate 274. When the enable write signal is low which indicates that one of the three data patterns has not occurred, it is inverted by enable write inverter 270. This allows the delayed data from delay line 276 to be clocked. On the other hand, if enable write is high, which indicates that one of the three data patterns has occurred, then the not delay select AND gate 274 allows the transmission of the data from data sequence D flip flop 253 which is undelayed. The output from delay select AND 272 and not delay select AND gate 274 is OR'd in data OR gate 278 where it is outputted from delay circuit 269. Although prior discussions about the write compensation circuit or timing indicated that for the three data patterns, the write pulse would occur 10 nanoseconds earlier, in actual implementation, data is delayed 10 nanoseconds for all data but the three data patterns. The delay of delay circuit 276 is set between 8 to 12 nanoseconds for the frequency of the preferred embodiment.

When recording lower frequency data patterns, the resultant magneto-optical signal has a slower rise time than fall time. This causes the final output from the waveform processor 22 to have degraded amplitude on positive peaks which can be corrected by recording with higher effective power at the leading edge of the data pattern. For the preferred embodiment, the data pattern "000111" will trigger a wide write signal during the second "1" of the data pattern thereby pulsing the laser during its normal off period.

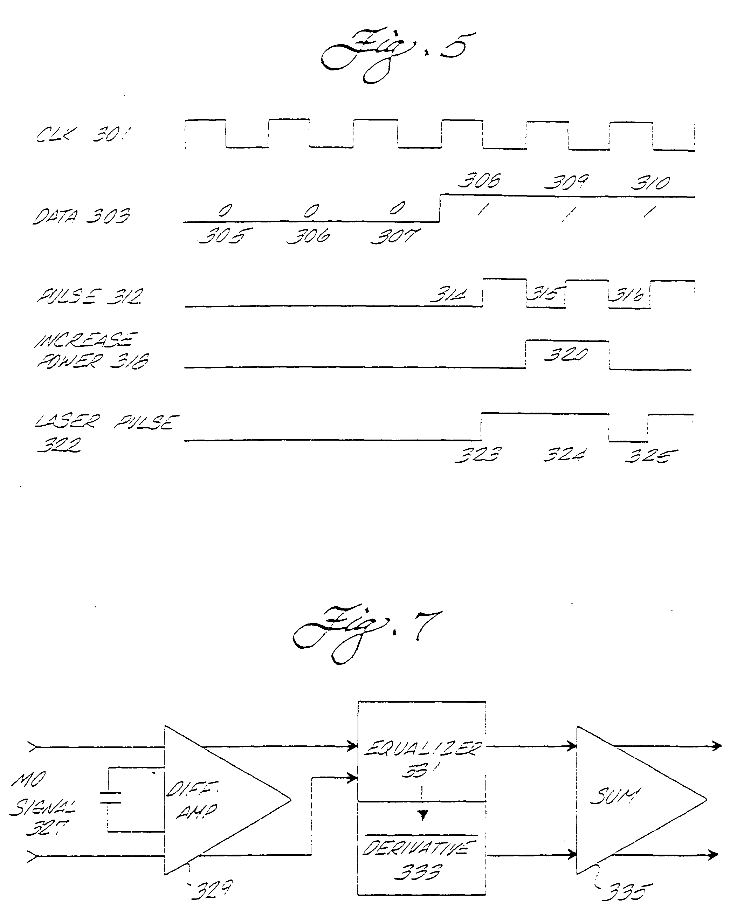

In FIG. 5, clock waveform 301 clocks data waveform 303 through the laser pulse greater 14 for the data pattern "000111". As depicted by data 305 through 310, the laser pulse generator 14 generates pulse waveform 312 with pulses 314, 315 and 316 when data waveform 303 is a "1". During the second "1" of this data pattern, the laser pulse generator 14 will turn on for the increase power waveform 318 and generate a pulse 320. The output laser pulse waveform 322 results from the OR of pulse 312 and turn on for the increase power waveform 318 that creates laser pulses 323, 324 and 325. Under normal operations, laser pulse 324 would be off during the first half of the clock period. However, under this particular data pattern, keeping the laser on for the laser pulses 323 and 324, effectively increases the power fifty percent during this time period.

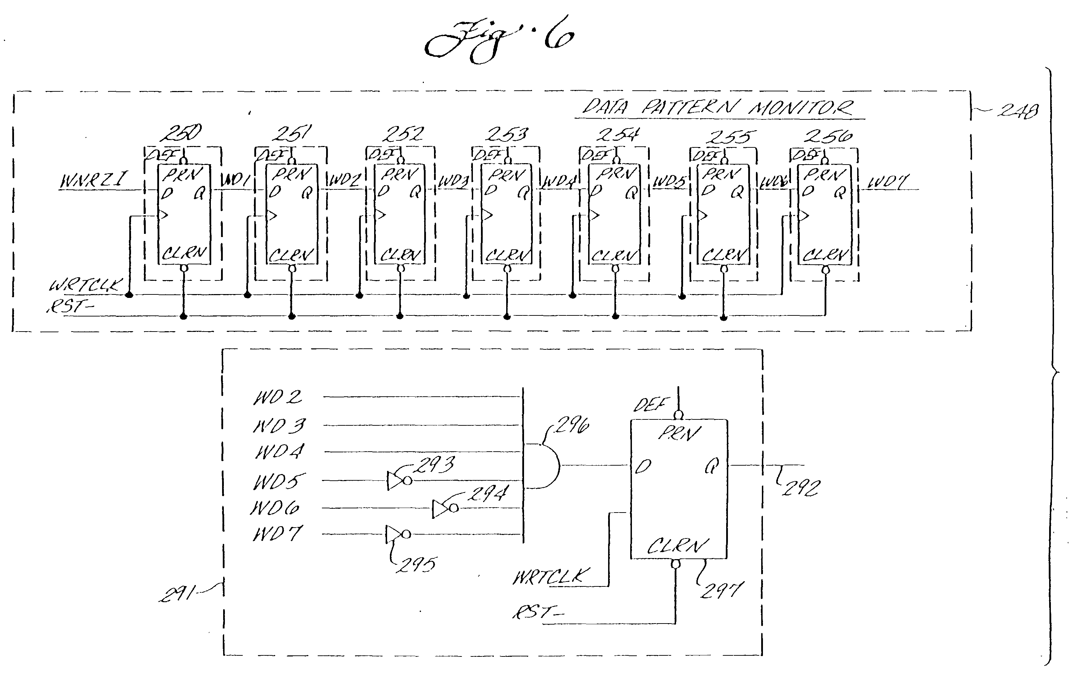

In FIG. 6, amplitude asymmetry correction circuit 291 generates the write wide pulse 292 which will be OR'd with the laser pulse output from delay circuit 269 in laser pulse OR gate 280 resulting in laser pulse waveform 322. The data pattern monitor 248 operates as shown in FIG. 4. The Q outputs WD1, WD2, WD3, WD4, WD5, WD6 and WD7 of data sequence D flip flops 251 through 256 are inputted into the amplitude asymmetry correction circuit 291 where the outputs WD5, WD6, and WD7 of data sequence D flip flops 254, 255 and 256 are inverted in data inverters 293, 294 and 295 respectively. The outputs of data inverters 293, 294 and 295 and data sequence D flip flops 251, 252 and 253 are AND'd in detect AND gate 296. The output of detect AND gate 296 indicates a detected pattern form "000111" which will be clocked out of write wide D flip flop 297 at the next clock 301.

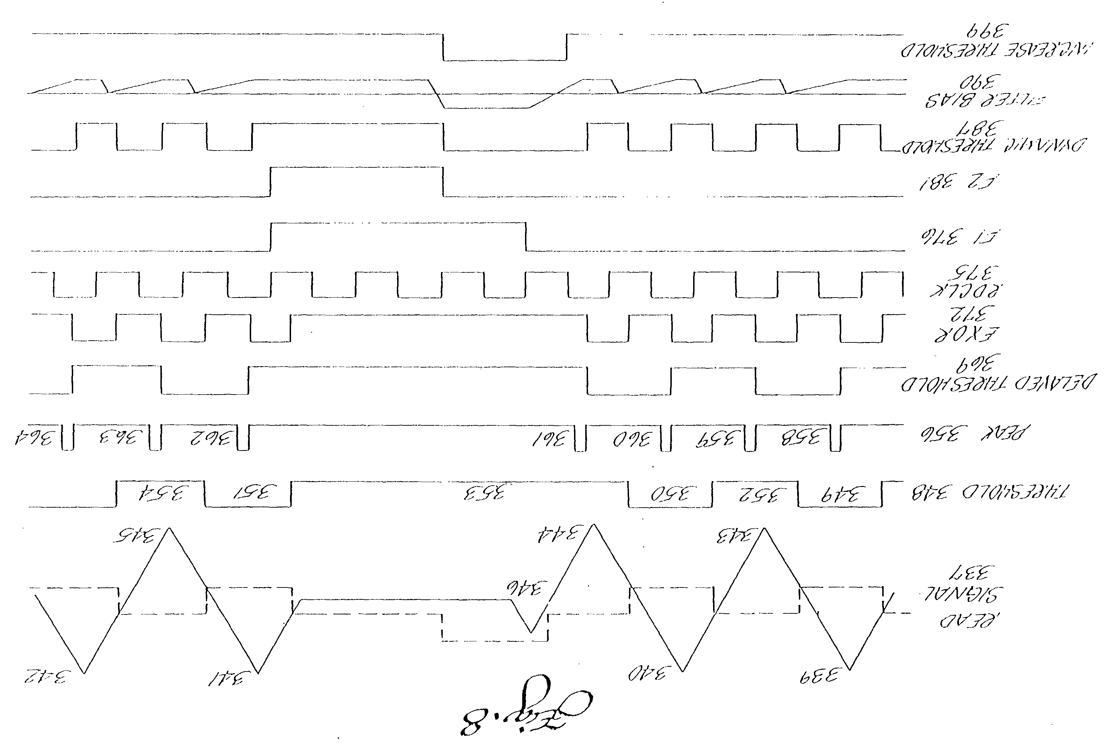

The waveform output of the optical reader 20 will be degraded as a function of frequency and data pattern. Amplitude and timing can be enhanced by processing the signal through the waveform processor 22. The asymmetry of the rise and fall times of an isolated pulse can be improved by summing an equalized differentiated signal with its derivative. In FIG. 7, magneto-optical signal 327 is differentiated by a differential amplifier 329. The differentiated signal is inputted into an equalizer 331 where it is equalized by 5 dB in the preferred embodiment and the amplitude is equalized as a function of frequency. The derivative of the equalized signal is taken by a derivative processor 333 and summed with the equalized signal in an adder 335. The output of the adder 335 is the read signal 337.

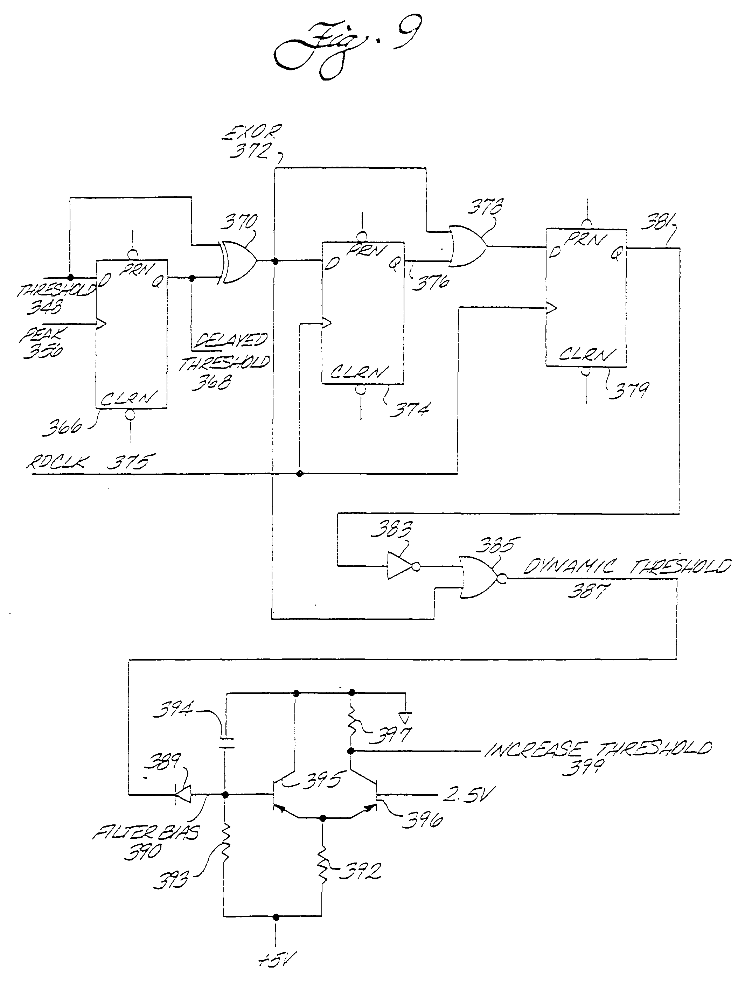

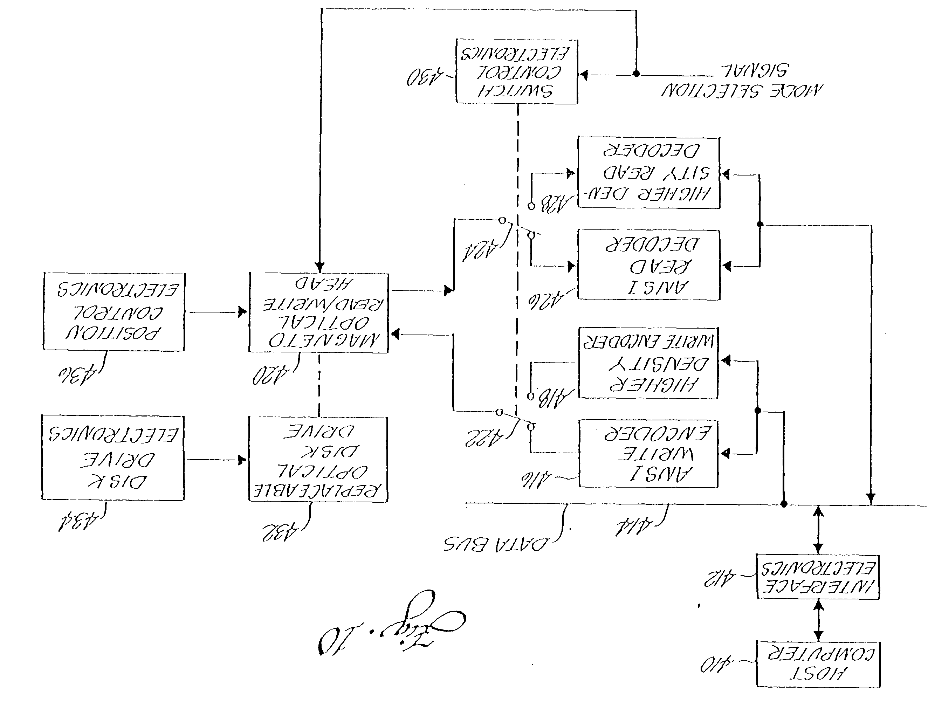

FIG. 8 shows the timing diagram for the dynamic threshold circuit shown in FIG. 9.

Read signal 337 will contain an overshoot produced by the pulse slimming. Because this overshoot is predictable, the threshold for the read circuitry can be increased during the overshoot to prevent false data reads during positive peaks 339, 340, 341 and 342, and during negative peaks 343, 344 and 345 of read signal 337. Threshold waveform 348 is switched high during positive peaks. Threshold waveforms 349, 350 and 351 are high during positive peaks 339, 340 and 341. Threshold waveforms 352, 353 and 354 are low during negative peaks 343, 344, and 345. Each peak, whether positive or negative, of the read signal 337 generates peak waveform 356 which is a short clocking pulse that occurs shortly after the read signal 337 peaks. Peak waveforms 339, 343, 340, 344, 341, 345 and 342 of the read signal 337 generate peak waveforms 358 through 364, respectively.

Threshold waveform 348 is inputted into the D port of threshold delay D flip flop 366. Peak waveform 356 clocks threshold waveform 348 through this flip flop. Delayed threshold waveform 368 is the Q output of threshold delay D flip flop 366 which is exclusively OR'd with threshold 348 in threshold-exclusive OR gate 370. The EXOR signal 372 is the output of threshold exclusive OR gate 370. The EXOR signal 372 has twice the frequency of the original threshold waveform 348. The EXOR signal 372 is inputted into the D port of EXOR D flip flop 374 where it is clocked at read clock 375. F1 waveform 376 is the Q output of EXOR D flip flop 374. Read clock waveform 375 has a leading edge during high pulses of EXOR signal 372, except when EXOR signal 372 is low for more than one read clock waveform 375. Thus, the F1 waveform 376 is high except for the time between the first read clock 375 pulse after the EXOR signal 372 is low for more than one read clock 375 and the next EXOR signal 372 pulse.

F1 waveform 376 is OR'd with the EXOR signal 372 in envelope OR gate 378. The output of envelope OR gate 378 is high except for the time from the first read clock 375 after the EXOR signal 372 has been low for more than one clock period until the signal 372 goes high again. The output of envelope OR gate 378 is clocked through the D input of envelope D flip flop 379 which is clocked by read clock 375. The Q output of the envelope D flip flop 379 is F2 waveform 381. The F2 waveform 381 is high except from the second read clock 375 period after the EXOR signal 372 goes low until the next read clock 375 clocks a high for the EXOR signal 372. The F2 waveform 381 is inverted through the F2 inverter 383 and NOR'd with the EXOR signal 372 in dynamic threshold NOR gate 385 to produce the dynamic threshold waveform 387. The dynamic threshold waveform 387 is high any time the EXOR signal 372 is low except when the F2 waveform 381 is low. Thus, the dynamic threshold waveform 387 has an on-time less than a half read clock 375 period except when the EXOR signal 372 is low on the next read clock 375 period. For this exception, the dynamic threshold waveform 387 stays high from the end of the EXOR signal 372 until the second read clock 375 pulse.

The Dynamic threshold waveform 387 is used to forward or reverse bias a biasing diode 389. When dynamic threshold 387 is high, biasing diode 389 is reverse biased. Conversely, when the dynamic threshold waveform 387 is low, the biasing diode 389 is forward biased.

When the dynamic threshold waveform 387 forward biases the biasing diode 389, the potential of the filter bias signal 390 is higher by the junction voltage of the biasing diode 389. This potential is 0.6 volts for standard devices. The 5-volt supply voltage drops across the limiting resistor 393 to the potential of the filter bias signal 390, because the voltage across the charging capacitor 394 is the difference between the filter bias signal 390 and ground. The charging capacitor charges up to this potential which is also the base voltage of a transistor 395. This turns on the transistor 395, causing the voltage drop across a limiting resistor 392 to be almost 5 volts. Because the emitters of the transistors 395 and 396 are connected, the emitter voltage of the transistor 396 is less than the 2.5-volt base voltage of the transistor 396. Accordingly, the transistor 396 is off so that the collector voltage across the collector resistor 397 produces an increase threshold waveform 399 which is low. The increase threshold waveform 399 is the signal that increases the threshold of the read signal 377 detector during periods of overshoot.

When the dynamic threshold waveform 387 is high, the biasing diode 389 is reversed biased, thereby no longer grounding the base of the transistor 395. When the dynamic threshold waveform 387 goes high, the charging capacitor 394 starts charging, creating a potential at the base of the transistor 395 that will rise exponentially up to the supply voltage, 5 volts. As the filter bias signal 390 rises in voltage, the voltage at the emitter of the transistor 395 increases which equally increases the emitter voltage of the transistor 396. When this emitter voltage exceeds the base voltage by the junction potential across the emitter-to-base junction, the transistor 396 is turned on. Turning on the transistor 396 causes the increase threshold waveform 399 to go high.

Under normal operations, the dynamic threshold waveform 387 is pulsed as described above. During normal read signals, the dynamic threshold 387 is on for a period equivalent to the on-period of read clock 375. The charge time for the voltage across the charging capacitor 394 to exceed the base voltage of 2.5 volts is longer than this half clock period of time. Thus, under normal circumstances, the increase threshold waveform 399 remains low. However, during periods of overshoot, the dynamic threshold waveform 399 is on for a longer period of time, thereby allowing the charging capacitor 394 to charge to a voltage that exceeds 2.5 volts, thereby triggering the increase threshold waveform 399 to go high.

In FIG. 10, a host computer 410 which serves as a source and utilizer of digital data is coupled by interface electronics 412 to a data bus 414. As host computer 410 processes data, and it wants to access external memory from time to time, a connection is established through interface electronics 412 to data bus 414 . Data bus 414 is coupled to the input of a write encoder 416 and the input of a write encoder 418. Preferably, write encoder 16 encodes data from bus 414 in a low density, i.e. ANSI format and write encoder 418 encodes data from data bus 414 in a higher density format. The Draft Proposal for 90 MM Rewriteable Optical Disk Cartridges for Information Interchange, dated 1 January 1991, which describes the ANSI format, is incorporated herein by reference. The outputs of write encoders 416 and 418 are coupled alternatively through a switch 422 to the write input of a magneto optical read/write head 420. The read output of head 420 is coupled alternatively through a switch 424 to the inputs of a read decoder 426 and a read decoder 428. Read decoder 426 decodes data in the same format, i.e. ANSI, as write encoder 416, and read decoder 428 decodes data in the same format as write encoder 418. Preferably, the encoding and decoding technique disclosed above is employed to implement write encoder 418 and read decoder 428. The outputs of encoders 426 and 428 are connected to data bus 414.

Responsive to a mode selection signal, switch control electronics 430 sets the states of switches 422 and 424 into either a first mode or a second mode. In the first mode, write encoder 418 and read decoder 428 are connected between data bus 414 and read/write head 420. In the second mode, write encoder 416 and read decoder 426 are connected between data bus 414 and read/write head 420. Read/write head 420 reads encoded data from and writes encoded data to a 490 millimeter optical disk received by a replaceable optical disk drive 432, which is controlled by disk drive electronics 434. Read/write head 420 is transported radially across the surface of the disk received by disk drive 432 by position control electronics 436.

When a 90 millimeter disk in a high density format is received by disk drive 432, a mode selection signal sets the system in the first mode. As a result, data from host computer 410, to be stored on the disk, is organized by interface electronics 412 and encoded by write encoder 418, while data read from the disk is decoded by read decoder 428, reorganized by interface electronics 412 and transmitted to host computer 410 for processing.

When a 90 millimeter disk in the low density ANSI format is received by disk drive 432, a mode selection signal sets the system in the second mode. As a result, data from host computer 410 , to be stored on the disk, is organized by interface electronics 412 and encoded by write encoder 416, while data read from the disk is decoded by read decoder 426, reorganized by interface electronics 412 and transmitted to host computer 410 for processing.

In certain cases, it may be desirable to modify the laser for the first and second modes. For example, different laser frequencies could be used or different laser focussing lens systems could be used for the different modes. In such case, the mode selection signal is also coupled to read/write head 420 to control the conversion between frequencies or optical lens focussing systems, as the case may be.

It is preferable to organize the data stored in both formats to have the same number of bytes per sector, i.e., in the case of ANSI, 512 bytes. In such case, the same interface electronics 412 can be used to organize the data stored and retrieved from the disks in both formats.

The same read/write head, position control electronics, optical disk drive, disk drive electronics, interface electronics and data bus can be employed to store data on and retrieve data from optical disks in different formats. As a result, downward compatibility from higher density formats that are being developed as the state of the art advances, to the industry standard ANSI format can be realized using the same equipment.

## Claims

1. A method of retrieving digital data recorded on an optical disk, said method comprising the steps of:
directing a read beam at a recorded surface of the disk such that said read beam selectively accesses one of a plurality of tracks on the recorded surface;
detecting from a beam returning from the recorded surface, the data recorded on the disk;
generating from the data recorded on the disk a clock signal that defines a clock interval equal to a time duration between bits of data recorded on the disk;
generating a binary signal that represents the data recorded on the disk, said binary signal having either a first or a second binary value during a period substantially equal to the clock interval; and
narrowing the width and increasing the amplitude of pulses of said binary signal by differentiating said binary signal, equalizing said differentiated signal, generating a first derivative of said equalized signal, and summing said equalized signal with said first derivative, thereby generating an improved binary signal.

2. An apparatus for reading data in tracks on an optical disk, comprising :
a laser having a focused laser beam;
means for directing the laser at the disk to selectively access one of the tracks to form a beam returning from the disk;
means for detecting the data from said returning beam;
means responsive to said detecting means for generating a binary signal;
means for narrowing the width and increasing the amplitude of pulses of said binary signal, comprising :
a differential amplifier (329) coupled to said binary signal (327) and outputting a differentiated signal;
an equalizer (331) coupled to said differentiated signal and outputting an equalized signal;
a differentiator (333) coupled to said equalized signal and outputting a first derivative thereof; and
a summer (335) coupled to said equalized signal and to said first derivative, said summer outputting an improved binary signal; and
means for processing said improved binary signal into code words.

3. The apparatus according to claim 2 wherein said means for processing includes a dynamic threshold generator.

4. The apparatus according to claim 2 wherein said means for detecting further includes a means for adjusting a threshold of sensitivity of said means for detecting, said means for adjusting a threshold of sensitivity being responsive to said dynamic threshold generator.

5. A system for storing and retrieving data on an optical medium, comprising :
an encoder for encoding binary code words in which encoded bits have first and second binary values at a predefined clock interval;
a pulse generator generating, during each clock interval in which said encoded bits have said first binary value, energizing pulses;
a write beam responsive to said energizing pulses for recording indicia on the optical media;
a read beam directed at the optical media to access said recorded indicia for readback thereof and generation of a readback signal having a first readback binary value in a presence of a recorded indicia and a second readback binary value in an absence of a recorded indicia;
a differential amplifier (329) coupled to said readback signal;
an equalizer (331) coupled to said differential amplifier;
a differentiator (333) coupled to said equalized signal and outputting a first derivative thereof;
a summer (335) coupled to said equalizer and to said differentiator, said summer outputting an improved readback signal;
a processor coupled to said improved readback signal for recovering said binary code words therefrom; and
a decoder for decoding said recovered code words.

6. The system according to claim 5 wherein said processor includes a dynamic threshold generator.

7. A method for storing digital data on an optical disk, said method comprising the steps of:
generating a binary signal having first and second binary values at a given clock interval representative of the data;
generating energizing pulses having a duration less than the clock interval during each clock interval having one of the binary values;
directing a focused laser at the recording surface of a rotating optical disk such that the laser beam can selectively access one of a plurality of concentric tracks on the recording surface; and
applying the energizing pulses to the laser to turn the laser beam on and off depending upon the value of the binary signal.

8. Apparatus for recording data on an optical disk, comprising :
a source of digital data occurring at a given clock interval;
means for converting the data to a binary signal having first and second binary values at a given clock interval representative of the data;
an optical data storage disk having a recording surface;
means for rotatably driving the disk;
a laser having a focused beam;
means for directing the laser at the recording surface such that the laser beam can access one of a plurality of concentric tracks on the recording surface;
means for generating energizing pulses having a duration less than a clock interval for converted data having the first binary value; and
means for applying the energizing pulses to the laser to turn the laser beam on and off responsive to the energizing pulses.

9. The apparatus of claim 8 wherein said converting means forms a binary signal that always changes value within a predetermined multiple of the clock interval.

10. The apparatus of claim 9 wherein said predetermined multiple is three.

11. The apparatus of claim 8 wherein said converting means forms a binary signal that follows eight to nine group code recording (GCR).

12. The apparatus of claim 8 wherein said applying means further comprises :
means for detecting predetermined sequences of converteddata ; and
means for adjusting the time of applying the energizing pulses upon the occurrence of a predetermined data sequence.

13. The apparatus of claim 12 wherein said predetermined data patterns comprise the data sequences 1100, 10100, 00100, and 000111.

## Patentansprüche

1. Verfahren zur Wiedergewinnung von digitalen Daten, die auf einer optischen Platte aufgezeichnet sind, welches Verfahren die folgenden Schritte umfaßt:
Lenken eines Lesestrahls auf eine beschriebene Oberfläche der Platte in solcher Weise, daß der Lesestrahl selektiv auf eine einer Vielzahl von Spuren auf der beschriebenen Oberfläche zugreift;
Detektieren der Daten, die auf der Platte aufgezeichnet sind, aus einem Strahl, der von der beschriebenen Oberfläche zurückkehrt;
Erzeugen eines Taktsignals aus den auf der Platte aufgezeichneten Daten, welches einen Taktintervall definiert, der gleich ist einer Zeitdauer zwischen den Bits der Daten, die auf der Platte aufgezeichnet sind;
Erzeugen eines Binärsignals, welches die Daten wiedergibt, die auf der Platte aufgezeichnet sind, wobei das Binärsignal entweder einen ersten oder einen zweiten binären Wert hat, während einer Periode, die im wesentlichen gleich ist dem Taktintervall; und
Verengen der Breite und Vergrößern der Amplitude der Impulse des binären Signals durch Differenzieren des binären Signals, Entzerren (equalizing) des differenzierten Signals, Erzeugen einer ersten Ableitung des entzerrten Signals und Summieren des entzerrten Signals mit der ersten Ableitung, um dadurch ein verbessertes binäres Signal zu erzeugen.

2. Gerät zum Lesen von Daten in Spuren auf einer optischen Platte, mit:
einem Laser mit einem fokussierten Laserstrahl:
einer Einrichtung, um den Laser auf die Platte zu lenken, um selektiv auf eine der Spuren zuzugreifen, um einen von der Platte rückkehrenden Strahl zu erzeugen;
einer Einrichtung zum Detektieren der Daten aus dem rückkehrenden Strahl;
einer Einrichtung, die auf die Detektoreinrichtung anspricht, um ein binäres Signal zu erzeugen;
einer Einrichtung zum Verengen der Breite und zum Vergrößern der Amplitude der Impulse des binären Signals, welches Gerät aufweist:
einen Differenzverstärker (329), an den das binäre Signal (327) angekoppelt wird und der ein differenziertes Signal ausgibt;
einen Entzerrer (331), an den das differenzierte Signal gekoppelt wird, und der ein entzerrtes Signal ausgibt;
einen Differenzierer (333), an den das entzerrte Signal gekoppelt wird und der eine erste Ableitung desselben ausgibt; und
eine Summiereinrichtung (335), an die das entzerrte Signal gekoppelt wird, und an die die erste Ableitung gekoppelt wird, wobei die Summiereinrichtung ein verbessertes binäres Signal ausgibt; und
eine Einrichtung zum Verarbeiten des verbesserten binären Signals in Kodeworte.

3. Gerät nach Anspruch 2, bei dem die Einrichtung zum Verarbeiten einen dynamischen Schwellenwertgenerator enthält.

4. Gerät nach Anspruch 2, bei dem die Einrichtung zum Detektieren ferner eine Einrichtung enthält, um einen Schwellenwert der Empfindlichkeit der Detektoreinrichtung einzustellen, wobei die Einrichtung zum Einstellen eines Schwellenwertes der Empfindlichkeit auf den dynamischen Schwellenwertgenerator anspricht.

5. System zum Speichern und zum Wiedergewinnen von Daten auf einem optischen Medium, mit:
einem Kodierer zum Kodieren von binären Kodeworten, in denen kodierte Bits erste und zweite binäre Werte bei einem vordefinierten Taktintervall besitzen;
einem Impulsgenerator, der während jedes Taktintervalls, in welchem die kodierten Bits den ersten binären Wert besitzen, Erregungsimpulse erzeugt;
einem Schreibstrahl, der auf die Erregungsimpulse anspricht, um Kennungen (indicia) auf den optischen Medien aufzuzeichnen;
einem Lesestrahl, der auf die optischen Medien gerichtet ist, um auf die aufgezeichneten Kennungen (indicia) zum Rücklesen derselben zuzugreifen und
um ein Rücklesesignal mit einem ersten Rücklese-Binärwert bei einem Vorhandensein einer aufgezeichneten Kennung (indicia) und mit einem zweiten Rücklese-Binärwert bei einer Abwesenheit einer aufgezeichneten Kennung zu erzeugen;
einem Differenzverstärker (329), an den das Rücklesesignal gekoppelt wird;
einem Entzerrer (331), der an den Differenzverstärker gekoppelt ist;
einem Differenzierer (333), an den das entzerrte Signal gekoppelt wird, und der eine erste Ableitung desselben ausgibt;
einer Summiereinrichtung (335), die an den Entzerrer und an den Differenzierer gekoppelt ist, wobei die Summiereinrichtung ein verbessertes Rücklesesignal ausgibt;
einem Prozessor, an den das verbesserte Rücklesesignal gekoppelt wird, um die Binärkodeworte daraus wiederzugewinnen; und
einem Dekodierer zum Dekodieren der wiedergewonnen Kodeworte.

6. System nach Anspruch 5, bei dem der Prozessor einen dynamischen Schwellenwertgenerator enthält.

7. Verfahren zum Speichern von digitalen Daten auf einer optischen Platte, welches Verfahren die folgende Schritte umfaßt:
Erzeugen eines binären Signals mit einem ersten und mit einem zweiten binären Wert bei einem gegebenen Taktintervall, die für die Daten repräsentativ sind;
Erzeugen von Erregungsimpulsen mit einer Dauer kleiner als der Taktintervall während jedes Taktintervalls, der einen der binären Werte hat;
Lenken eines fokussierten Laserstrahls auf die Aufzeichnungsoberfläche einer rotierenden optischen Platte in solcher Weise, daß der Laserstrahl selektiv auf eine einer Vielzahl von konzentrischen Spuren auf der Aufzeichnungsoberfläche zugreifen kann; und
Anlegen der Erregungsimpulse an den Laser, um den Laserstrahl ein und auszuschalten abhängig von dem Wert des binären Signals.

8. Gerät zum Aufzeichnen von Daten auf einer optischen Platte, mit:
einer Quelle für digitale Daten, die in einem gegebenen Taktintervall auftreten;
einer Einrichtung zum Umsetzen der Daten in ein binäres Signal mit einem ersten und mit einem zweiten binären Wert bei einem gegebenen Taktintervall, der für die Daten repräsentativ ist;
einer optischen Datenspeicherplatte mit einer Aufzeichnungsoberfläche;
einer Einrichtung für den Drehantrieb der Platte;
einem Laser mit einem fokussierten Strahl;
einer Einrichtung, um den Laserstrahl auf die Aufzeichnungsoberfläche derart zu lenken, daß der Laserstrahl auf eine einer Vielzahl von konzentrischen Spuren auf der Aufzeichnungsoberfläche zugreifen kann;
einer Einrichtung zum Erzeugen von Erregungsimpulsen mit einer Dauer, die kleiner ist als ein Taktintervall, um die Daten, die den ersten binären Wert haben, umzuwandeln; und
einer Einrichtung zum Anlegen der Erregungsimpulse an den Laser, um den Laserstrahl im Ansprechen auf die Erregungsimpulse ein- und auszuschalten.

9. Gerät nach Anspruch 8, bei dem die Umsetzeinrichtung ein binäres Signal erzeugt, welches immer den Wert innerhalb von einem vorbestimmten Vielfachen des Taktintervalls ändert.

10. Gerät nach Anspruch 9, bei dem das vorbestimmte Vielfache drei ist.

11. Gerät nach Anspruch 8, bei dem die Umsetzeinrichtung ein binäres Signal erzeugt, welches einer Acht-Zu-Neun-Gruppenkodeaufzeichnung (GCR) folgt.

12. Gerät nach Anspruch 8, bei dem die Anlegeeinrichtung ferner folgendes aufweist:
eine Einrichtung zum Detektieren vorbestimmter Sequenzen der umgesetzten oder umgewandelten Daten; und
eine Einrichtung zum Einstellen des Zeitpunktes zum Anlegen der Erregungsimpulse nach dem Auftreten einer vorbestimmten Datensequenz.

13. Gerät nach Anspruch 12, bei dem die vorbestimmten Datenmuster die Datensequenzen 1100,10100, 00100 und 000111 aufweisen.

## Revendications

1. Procédé de recherche de données numériques enregistrées sur un disque optique, ledit procédé comportant les étapes consistant à :
diriger un faisceau de lecture sur une surface enregistrée du disque de sorte que ledit faisceau de lecture effectue un accès d'une manière sélective à une piste parmi une pluralité de pistes situées sur la surface enregistrée,
détecter à partir d'un faisceau de retour de la surface enregistrée, les données enregistrées sur le disque,
générer à partir des données enregistrées sur le disque un signal d'horloge qui définit un intervalle d'horloge égal à une durée de temps entre des bits de données enregistrées sur le disque,
générer un signal binaire qui représente les données enregistrées sur le disque, ledit signal binaire ayant une première ou une seconde valeur binaire pendant une période sensiblement égale à l'intervalle d'horloge, et
rétrécir la largeur et augmenter l'amplitude des impulsions dudit signal binaire en différenciant ledit signal binaire, en égalisant ledit signal différencié, en générant une première dérivée dudit signal égalisé, et en sommant ledit signal égalisé avec ladite première dérivée, générant ainsi un signal binaire amélioré.

2. Dispositif destiné à lire des données se trouvant dans des pistes sur un disque optique, comportant :
un laser ayant un faisceau laser focalisé,
des moyens pour diriger le laser sur le disque afin d'effectuer un accès d'une manière sélective à l'une des pistes pour former un faisceau de retour du disque,
des moyens pour détecter les données à partir dudit faisceau de retour,
des moyens sensibles auxdits moyens de détection pour générer un signal binaire,
des moyens pour rétrécir la largeur et augmenter l'amplitude des impulsions dudit signal binaire, comportant :
un amplificateur différentiel (329) couplé audit signal binaire (327) et délivrant en sortie un signal différencié,
un égaliseur (331) couplé audit signal différencié et délivrant en sortie un signal égalisé,
un différentiateur (333) couplé audit signal égalisé et délivrant en sortie une première dérivée de celui-ci, et
un additionneur (335) couplé audit signal égalisé et à ladite première dérivée, ledit additionneur délivrant en sortie un signal binaire amélioré, et
des moyens pour traiter ledit signal binaire amélioré sous forme de mots de code.

3. Dispositif selon la revendication 2, dans lequel lesdits moyens de traitement incluent un générateur à seuil dynamique.

4. Dispositif selon la revendication 2, dans lequel lesdits moyens de détection incluent en outre des moyens pour ajuster un seuil de sensibilité desdits moyens de détection, lesdits moyens pour ajuster un seuil de sensibilité étant sensibles audit générateur à seuil dynamique.

5. Système destiné à mémoriser et à rechercher des données sur un support optique, comportant :
un codeur destiné à coder des mots de code binaire dans lesquels des bits codés ont une première et une seconde valeur binaire au niveau d'un intervalle d'horloge prédéfini,
un générateur d'impulsions générant, pendant chaque intervalle d'horloge dans lequel lesdits bits codés ont ladite première valeur binaire, des impulsions d'excitation,
un faisceau d'écriture sensible auxdites impulsions d'excitation pour enregistrer des indices sur les supports optiques,
un faisceau de lecture dirigé sur les supports optiques pour effectuer un accès auxdits indices enregistrés pour les signaler et générer un signal d'écho ayant une première valeur binaire d'écho en présence d'indices enregistrés et une seconde valeur binaire d'écho en l'absence d'indices enregistrés,
un amplificateur différentiel (329) couplé audit signal d'écho,
un égaliseur (331) couplé audit amplification différentiel,
un différentiateur (333) couplé audit signal égalisé et délivrant en sortie une première dérivée de celui-ci,
un additionneur (335) couplé audit égaliseur et audit différentiateur, ledit additionneur délivrant en sortie un signal d'écho amélioré,
un processeur couplé audit signal d'écho amélioré pour récupérer lesdits mots de code binaire à partir de celui-ci, et
un décodeur destiné à décoder lesdits mots de code récupérés.

6. Système selon la revendication 5, dans lequel ledit processeur inclut un générateur à seuil dynamique

7. Procédé pour mémoriser des données numériques sur un disque optique, ledit procédé comportant les étapes consistant à :
générer un signal binaire ayant une première et une seconde valeur binaire au niveau d'un intervalle d'horloge donné représentant les données,
générer des impulsions d'excitation ayant une durée inférieure à l'intervalle d'horloge pendant chaque intervalle d'horloge ayant l'une des valeurs binaires,
diriger un laser focalisé sur la surface d'enregistrement d'un disque optique rotatif de sorte que le faisceau laser peut effectuer un accès d'une manière sélective à une piste parmi une pluralité de pistes concentriques se trouvant sur la surface d'enregistrement, et
appliquer les impulsions d'excitation au laser pour laisser passer et bloquer le faisceau laser suivant la valeur du signal binaire.

8. Dispositif pour enregistrer des données sur un disque optique, comportant :
une source de données numériques apparaissant à un intervalle d'horloge donné,
des moyens pour convertir les données en un signal binaire ayant des première et seconde valeurs binaires au niveau d'un intervalle d'horloge donné représentant les données,
un disque de mémorisation de données optiques ayant une surface d'enregistrement,
des moyens pour entraîner le disque d'une manière rotative,
un laser ayant un faisceau focalisé,
des moyens pour diriger le laser sur la surface d'enregistrement de sorte que le faisceau laser peut effectuer un accès à une piste parmi une pluralité de pistes concentriques se trouvant sur la surface d'enregistrement,
des moyens pour générer des impulsions d'excitation ayant une durée inférieure à un intervalle d'horloge pour des données converties ayant la première valeur binaire, et
des moyens pour appliquer les impulsions d'excitation au laser pour laisser passer et bloquer le faisceau laser en réponse aux impulsions d'excitation.

9. Dispositif selon la revendication 8, dans lequel lesdits moyens de conversion forment un signal binaire qui change toujours de valeur à l'intérieur d'un multiple prédéterminé de l'intervalle d'horloge.

10. Dispositif selon la revendication 9, dans lequel ledit multiple prédéterminé est trois.

11. Dispositif selon la revendication 8, dans lequel lesdits moyens de conversion forment une signal binaire qui est soumis à un enregistrement par codage de groupe huit-neuvième (GCR).

12. Dispositif selon la revendication 8, dans lequel lesdits moyens d'application comportent en outre :
des moyens pour détecter des séquences prédéterminées de données converties, et
des moyens pour ajuster la durée d'application des impulsions d'excitation lors de l'apparition d'une séquence de données prédéterminée.

13. Dispositif selon la revendication 12, dans lequel lesdits motifs de données prédéterminés comportent les séquences de données 1100, 10100, 00100 et 000111.
